# EUROPEAN PATENT APPLICATION

(11) **EP 4 647 215 A1**
(43) Date of publication of application: **12.11.2025**
(21) Application number: 24174485.3
(22) Date of filing: 07.05.2024
(51) Int. Cl.: B25J 9/16

(54) **METHOD AND SYSTEM FOR PREDICTING A MOTION TRAJECTORY OF A ROBOT MOVING BETWEEN A GIVEN PAIR OF ROBOTIC LOCATIONS**

(71) Applicant: Siemens Industry Software Ltd., 7019900 Airport City (IL)
(72) Inventor: Hazan, Moshe, 4083918 Elad (IL)
(74) Representative: Siemens Patent Attorneys

(57) **Abstract**

System and a method for simulating a motion behavior of a virtual robot. Data on a robotic pose list comprising at least poses of a virtual robot in a simulation interval are received from an external robotic platform. The robotic pose list is inputted into a robotic program Al module trained for outputting a robotic program. The outputted robotic program comprises at least data on the robotic target path of the interval. The robotic simulation tool uploads the robotic program and generates one or more 3D graphic views around one or more corresponding targets of the robotic path. The robotic simulation tool simulates the robot's motion behavior from the robotic program on at least one of said 3D graphic views.

## Description

### TECHNICAL FIELD

The present disclosure is directed, in general, to computer-aided design, visualization, and manufacturing ("CAD") systems, product lifecycle management ("PLM") systems, product data management ("PDM") systems, and similar systems, that manage data for products and other items (collectively, "Product Data Management" systems or PDM systems). More specifically, the disclosure is directed to production environment simulation. The present disclosure is also directed to the control and/or command of a robot based on a robotic simulation result.

### BACKGROUND OF THE DISCLOSURE

In some industrial scenarios, to validate robotic operations at the shopfloor, manufacturing companies make use of different types of robotic software applications interacting with each other.

For example, industrial users often make use of robotic software applications like virtual robotic simulation systems.

Examples of virtual robotic simulation systems include, but are not limited to, Computer Assisted Robotic ("CAR") tools, Process Simulate (a product of Siemens PLM software suite), robotic simulation software tools, and other virtual systems for simulation of industrial robots, herein simply called robotic simulation tools.

Industrial users make use of such robotic simulation tools to simulate the kinematic motion behavior of industrial robots in robotic cells at the shopfloor for example for validation and collision avoidance purposes. Typically, users utilize such robotic simulation tools to create, edit, validate, and simulate robotic programs of the robots. Once validated, the robotic program of the virtual robot can advantageously be downloaded and used by the real robot to perform its robotic tasks at the real shopfloor.

With the term robotic program, it is herein generally intended a set of robotic instructions needed for the robot to perform its robotic tasks. Typical examples of robotic tasks, include but are not limited to, welding, coating, picking, palletizing. A typical robotic program includes at least the list of coordinates of the robotic target locations where the robotic tasks are to be performed by the robotic tool, hereby such robotic targets list may be called robotic target path or simply robotic path. As used herein the terms robotic targets, target locations, targets path, or simply path denote the targets list where the target coordinates value can be given in various different coordinate representations e.g. cartesian coordinates or joint value coordinates. Beside the robotic path data, the robotic program typically includes also other robotic program related data like e.g. motion parameters like speed, acceleration, fine etc. and OffLine Programming ("OLP") commands like wait for time, wait for signals etc.

As the skilled persons know, the typical industrial robot has a plurality of kinematic joints *(e.g. J1, J2,* .., *J6)* and, often the kinematics of the robot is given in term of list of tuples of poses of the robot with their delta times *Δt,* whereby e.g. the poses are usually given as six joint values vector.

Beside using robotic simulation tools, industrial users often utilize other types of software robotic applications for example platforms like virtual robotic controllers ("VRC"), automatic path planners and other type of robotic experimentation platforms hereby simply called external robotic platforms.

Often, industrial users make use of a mix of robotic simulation tools and of external robotic platforms of different vendors that interact with each other e.g. by exchanging robotic and signal related data.

For example, robotic simulation tools like Process Simulate are often required to be connected and interact with external robotic platforms like VRC platforms e.g. KUKA Office, Robot Studio of ABB or other external robotic platforms like automatic path planners e.g. from RTR, robotic experimentation platforms and other robotic platforms like Artiminds, V-REP etc.

In a typical exemplary scenario of interaction between different types of robotic software applications, a user may utilize the external robotic platform e.g. the VRC controller to simulate the robot's behavior and to calculate the list of robotic poses, delta times during the robotic tasks. Such calculated robotic poses tuple data are transferred to the robotic simulation tool whereby the user can simulate the kinematic motion behavior of the robot and update the corresponding robotic signals.

Unfortunately, in such exemplary simulation scenario, the robotic inspection and validation capabilities of the user of the robotic simulation tool are limited. In fact, in such scenario, although the simulation tool receives from the external platform the robotic poses, it misses the essential data on the robotic program of the virtual robot which contains at least the robotic target path. With such essential data, the users are enabled to perform robotic behavior adjustments around the target locations and editing actions to the source code.

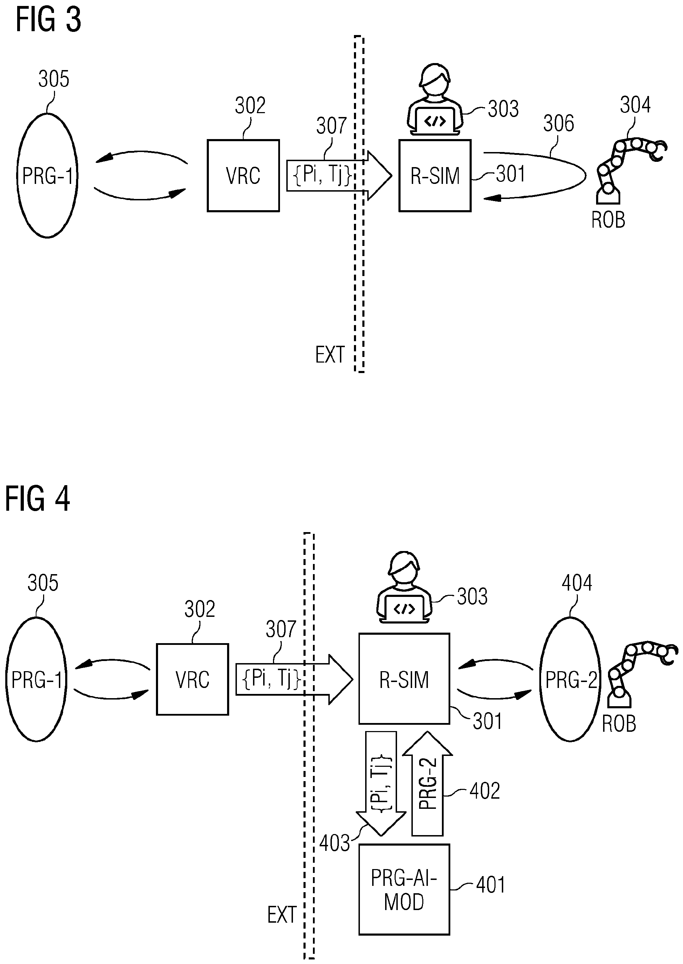

For example, such typical scenario is illustrated in Figure 3. Figure 3 illustrates a block diagram of a typical exemplary interaction between a robotic simulation tool and an external robotic platform.

Assume that the robotic simulation tool 301 is a CAR tool like e.g. Process Simulate and that the external robotic platform 302 is a Virtual Robotic Controller like for e.g. RobotStudio of ABB. The industrial user 303 wishes to simulates the kinematic motion behavior motion of a given virtual robot 304 inside the robotic simulation tool 301 in a time interval. To do this, the user 303 selects, inside the VRC controller 302, a desired robotic program 305 of the given robot and then hits play the simulation inside the VRC controller 302. The robotic simulation tool 301 is connected to the VRC controller 302 and gets from this controller the robot's poses with the delta times 307 along the whole simulated time interval. With the received poses tuple data, the user 303 can simulate the kinematics motion 306 inside the robotic simulation tool 301 and visualize it until the end of the simulation interval.

Although the industrial software user 303 is able to simulate and visualized the kinematics motion 306 of the robot 304 inside the tool 301, the user 303 is unfortunately unable to carefully inspect the robotic target path and/or perform adjustments and editing activities to the robotic program within the tool 301.

As the skilled persons know, to validate robotic operations, the industrial users are often required to inspect - within the robotic simulation tool - the robotic path, what the robot is doing in a three-dimensional ("3D") location view, to perform editing actions and to perform changes if needed, and/or to investigate and to fix problems that are discovered during the robotic simulation within the robotic simulation tool. These and other activities have an important impact on the final manufacturing operations performed by the real robots at the shopfloor.

Therefore, improved techniques for simulating the motion behavior of a robot are desirable.

### SUMMARY OF THE DISCLOSURE

Various disclosed embodiments include methods, systems, and computer readable mediums for simulating a motion behavior of a virtual robot. A method comprises receiving, from an external robotic platform, data on a robotic poses tuple list comprising at least poses of a virtual robot in a simulation interval, hereafter called robotic pose list. The method further includes inputting the robotic pose list into a robotic program Artificial Intelligence ("AI") module trained for outputting a robotic program for said robotic pose list; whereby the robotic program comprises at least data on the robotic target path of the interval. The method further includes uploading, by a robotic simulation tool, the robotic program and generating one or more 3D graphic views around one or more corresponding targets of the robotic path. The method further includes, by the robotic simulation tool, simulating the robot's motion behavior from said robotic program on at least one of said 3D graphic views.

Various disclosed embodiments include methods, systems, and computer readable mediums for generating a training dataset for training a robotic program AI module configured for outputting a robotic program. A method comprises receiving a virtual representation of a robot. The method further comprises receiving several robotic programs each comprising a robotic path for the virtual robot in a time interval. The method further comprises simulating, for each robotic program, the robot's motion in the time interval to obtain a robotic poses tuple list, wherein, at the end of each simulation time interval, the robotic poses tuple list is collected for populating an input training data set and the associated robotic program is collected for populating an output training dataset. The method further comprises storing the input and output training dataset to train an AI model of the robotic program AI module.

Various disclosed embodiments include methods, systems, and computer readable mediums for providing a robotic program AI module configured for outputting robotic program of a given robot in a time interval. The method further comprises receiving a training dataset with a first interface, wherein said training dataset comprises an input training dataset and an output training dataset, wherein the input training dataset comprises several robotic poses tuple lists of the given robot; and the output training dataset comprises for each robotic poses tuple list, a corresponding robotic program of the given robot. The method further includes training the robotic location AI module with the input and output training dataset. The method further includes providing said trained AI module with a second interface.

A data processing system comprising a processor and an accessible memory or database is also disclosed, wherein the data processing system is configured to implement any of the described methods. Embodiments propose also a non-transitory computer-readable medium encoded with executable instructions that, when executed, cause one or more data processing systems to perform any of the described methods.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a block diagram of a data processing system in which an embodiment can be implemented.
Figure 2 illustrates a flowchart for simulating a motion behavior of a virtual robot in accordance with disclosed embodiments.
Figure 3 illustrates a block diagram of a typical exemplary interaction between a robotic simulation tool and an external robotic platform.
Figure 4 illustrates a block diagram for simulating a motion behavior of a virtual robot in accordance with disclosed embodiments.

### DETAILED DESCRIPTION

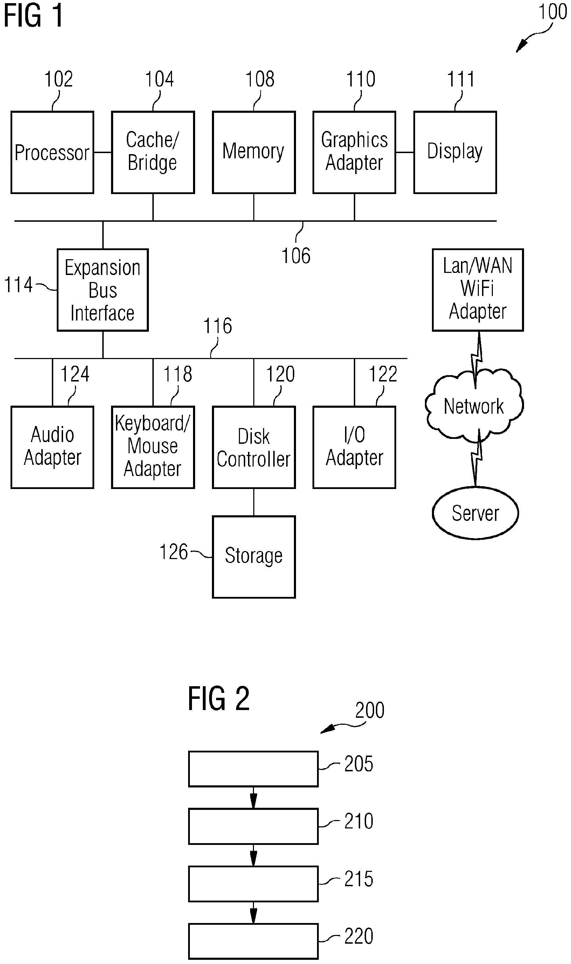

FIGURES 1 through 4, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Previous techniques for simulating the motion behavior of a virtual robot have some drawbacks. The embodiments disclosed herein provide numerous technical benefits, including but not limited to the following examples.

Embodiments enable users to simulate a generated robotic program corresponding to the robotic poses received from an external source like for example a VRC controller.

Embodiments enable a robotic simulation tool to predict and use the robotic program even when not received by the external robotic platform. Advantageously, the users of the robotic simulation tools, after uploading such robotic program, are able of inspecting it, debugging it, editing it, and/or downloading it.

With embodiments, industrial users are able to simulate the kinematic motion behavior of a virtual robot together with its robotic path and/or with its robotic program data to use inside the robotic simulation tool.

Embodiments enable to automatically upload a robotic program with robotic path in a robotic simulation tool, without the need of custom software developments.

Embodiments enable simulation tool users to visually inspect the 3D locations and enhance the robotic program accordingly.

With embodiments, simulation tools users can see all simulation information inside the tool even outside the simulation time since robot's source code is available. Advantageously, users can debug the source code and fix it upon need.

Embodiments enable running a simulation in a robotic simulation tool without the need of a connection to the VRC controller. Advantageously, users do not need a VRC license. Additionally, by running the simulation tool disconnected from the VRC controller, better performances may be achieved since for example there is no need of synchronization and no need of reaching an external server.

Embodiments provide an AI based solution to predict the robotic path from robotic poses coming an external system.

Embodiments may be used for robot validation purposes.

Figure 1 illustrates a block diagram of a data processing system 100 in which an embodiment can be implemented, for example as a PDM system particularly configured by software or otherwise to perform the processes as described herein, and in particular as each one of a plurality of interconnected and communicating systems as described herein. The data processing system 100 illustrated can include a processor 102 connected to a level two cache/bridge 104, which is connected in turn to a local system bus 106. Local system bus 106 may be, for example, a peripheral component interconnect (PCI) architecture bus. Also connected to local system bus in the illustrated example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but are not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware illustrated in Figure 1 may vary for particular implementations. For example, other peripheral devices, such as an optical disk drive and the like, also may be used in addition or in place of the hardware illustrated. The illustrated example is provided for the purpose of explanation only and is not meant to imply architectural limitations with respect to the present disclosure.

A data processing system in accordance with an embodiment of the present disclosure can include an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows^{™}, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

Figure 2 illustrates a flowchart 200 of a method for simulating a motion behavior of a virtual robot, preferably an industrial robot, in accordance with disclosed embodiments. Such method can be performed, for example, by system 100 of Figure 1 described above, but the "system" in the process below can be any apparatus configured to perform a process as described. Of course, the "system" in the following description of the method according to embodiments can be any apparatus suitable for performing the described process.

At act 205, the system receives from an external robotic platform, data on a robotic poses tuple list comprising at least poses of a virtual robot in a simulation interval, herein called robotic pose list. In embodiments, the external robotic platform may be any source external to the robotic simulation tool.

At act 210, the system inputs the robotic pose list into a robotic program AI module trained for outputting a robotic program for said robotic pose list; whereby the outputted robotic program comprises at least data on the robotic target path of the interval. In embodiments, the robotic program AI module is trained via a regression supervised learning algorithm.

At act 215, a robotic simulation tool uploads the outputted robotic program and generates one or more 3D graphic views around one or more corresponding targets of the robotic path.

At act 220, the robotic simulation tool simulates the robot's motion behavior from the robotic program on at least one of the 3D graphic views. Advantageously, in embodiments, the robotic simulation tool can simulate the robot's motion behavior without the need of being connected to the external robotic platform.

In embodiments, act 205 further includes receiving signal data for the robotic pose list and, in act 210, the outputted robot program further comprises at least one OLP command "wait for time" and it further includes replacing, within the robotic program, at least one OLP command "wait for time" with one OLP command "wait for a certain signal" when the time value (to wait for) is atypical and when in the same time slot a certain signal of the signal data has changed its value.

In embodiments, a real robot motion is controlled or commanded according to the simulated motion behavior at act 220.

In embodiments, act 220 a robotic program is adjusted and/or an adjusted robotic program is downloaded. In embodiments, the adjustment to the robotic program can be done to the robotic path or to other parameters and instructions of the robotic program.

In embodiments, the robotic program comprises one or more data from the group consisting of: motion commands e.g. move to location, jump to location; motion parameters e.g. speed, configuration, motion type; OLP commands e.g. wait time; external axes; tool center point relative to robot's base frame. In embodiments, the robotic poses tuple list comprises one or more data from the group consisting of external axes and time.

In embodiments, a robotic simulation tool connects to an external robotic platform to get the results of the platform simulation at run time the robot's pose list. The robotic simulation tool, at the end of such simulation interval or at last during a portion of the interval, is able to simulate a robotic program with targets path based on the robot's pose list.

### Algorithms of exemplary embodiments to synthetically generate training datasets

Exemplary embodiments illustrate the main algorithm phases and steps to generate training datasets for training an AI model of a robotic program AI module configured for outputting a robotic program. For this purpose, the data processing system 100 might be further configured in accordance with embodiments.

The system receives a virtual representation of a given robot. In exemplary embodiments, the robot may be a specific model of an ABB or a KUKA robot. The received virtual robot may preferably be used within a robotic simulation tool to synthetically generate the training datasets for the given robot. The training datasets are specific for the given type of robot and are then used to train the robotic program AI module for the specific given robot. In embodiments, the input training dataset consists of several sets of poses tuple lists of the robot and the output training dataset consists of the sets of corresponding robotic programs.

In embodiments, the data of the robotic program are organized in manners that are suitable to define output datasets both for AI training and AI module usage.

Assume each robotic program comprises at least the targets path and optionally other robotic task data such as motion parameters, OLP commands etc. As the skilled persons know there are several different ways to describe and represent the content of a robotic program and of the targets path of industrial robots.

Assume a generic description of a robotic program may be provided with the following notation: *List* <*Motion (robotic target* +*0-*parameters), 0-*OLP commands*> whereby a motion command and its parameters define how the robot shall reach a target e.g. *MoveToLocation, JumpToLocation,* etc. whilst an OLP command define what the robot shall do once the target location has been reached e.g. *Weld, WaitTime, WaitSignal* etc.

Assume the robotic program comprises three motion commands *MoveToLocation* of three robotic targets. With the symbols "0-*" it is meant that there can be zero but also one or more optional motion parameters for the targets as shown in Table 2, where the symbol "*" denotes that the field is optional. Additionally, the robotic program may also comprise one or more optional OLP commands e.g. *WaitTime, WaitSignal* etc.

For example, assume a simple robotic program whereby, in an interval, the robotic tasks of the specific robot consist in reaching three targets of a robotic path e.g. so that the robot's tool can weld such targets in a part. This simple robotic program may be represented with the three motion commands *MoveToLocation* for the three targets *Trgt1, Trgt2, Trgt3, e.g. <MoveToLocation Trgt1, MoveToLocation Trgt2, MoveToLocation Trgt3>.*

In an exemplary embodiment, the robotic program *List* <*Motion (Trgt1), Motion (Trgt2), Motion (Trgt3)>* is provided as a list of the three robotic targets with their vectors of cartesian coordinates values e.g. *(X,Y,Z,RX,RY,RZ)* as shown for example in Table 1 whereby the robotic program comprises the three targets path and whereby *MoveToLocation* is the implicit motion command for each of the three targets *Trgt1, Trgt2, Trgt3.*

**Table 1 - robotic program with target coordinates**

| | *X* | *Y* | *Z* | *RX* | *RY* | *RZ* |
|---|---|---|---|---|---|---|
| *Trgt1* | *413.9* | *62.11* | *21.7* | *-19.04* | *6.42* | *- 78* |
| *Trgt2* | *411.2* | *65.05* | *22.6* | *0.65* | *35* | *-38* |
| *Trgt3* | *401.2* | *58.90* | *19.6* | *-1.29* | *54.09* | *-1.5* |

In other embodiments, the vector of target coordinates may be provided in other formats than the cartesian format *(X,Y,Z,RX,RY,RZ).* For example, the target coordinates may be provided as robotic joint value format.

In another exemplary embodiment, the robotic program *List* <*Motion (Trgt1, Motion_parameters1), Motion (Trgt2, Motion_parameters2), Motion (Trgt3, Motion_parameters3)*> is provided as a list of the three robotic targets with their vectors of cartesian coordinates values e.g. *(X,Y,Z,RX,RY,RZ)* plus the motion parameters *Config, Zone, Speed* as shown for example in Table 2 whereby the robotic program comprises the three targets path and their motion parameters and whereby *MoveToLocation* is the implicit motion command for each of the three targets *Trgt1, Trgt2, Trgt3.*

**Table 2 - robotic program with target coordinates and motion parameters**

| | *X* | *Y* | *Z* | *RX* | *RY* | *RZ* | *Config* | *Zone* | *Speed* |
|---|---|---|---|---|---|---|---|---|---|
| *Trgt1* | *413.9* | *62.11* | *21.7* | *-19. 04* | *6.42* | *- 78* | *OH- J3- J5*+, *T1:-1 T4:0 T:0* | *fine* | *100%* |
| *Trgt2* | *411.2* | *65.05* | *22.6* | *0.65* | *35* | *-38* | *OH- J3- J5*+, *T1:-1 T4:0 T:0* | *CNT50* | *100%* |
| *Trgt3* | *401.2* | *58.90* | *19.6* | *-1.29* | *54.09* | *-1.5* | *OH- J3- J5*+, *T1:-1 T4:0 T:0* | *CNT30* | *2000 mm*/*s* |

Hence, in embodiments, the robotic program may include, beside the targets, some motion parameters and some OLP commands. Optionally, the robotic program includes also other robotic data such as external axes, Tool Center Point ("TCP") relative to the base frame and other robotic program data.

In embodiments, the target coordinates may conveniently be given as relative to a given reference frame of the specific robot. Preferably, the given reference frame of the specific robot may be the robot base frame as it is typically the case with downloaded robotic programs. Advantageously, in this manner, different base positions of specific robots can be flexibly supported by the AI prediction module. In embodiments, the poses tuple may comprise robotic tool-related information e.g. gripper, processing tools, guns etc. For example, robot tool-related information may comprise robot's tool type and/or tool differential position information. The differential tool position information may preferably be the delta between the robot's tool frame and the robot's TCP frame ("TCPF"). Advantageously, in this manner, different types of robotic tools/TCPFs can be flexibly supported by the AI module. In embodiments, the target coordinates may be given in the form of spatial coordinates describing the robot's tip position independently on the robot type or it may be given as robot poses (e.g. via robot's joint values). In other embodiments, the target position information may be given in other preferred formats that may or may not be robot specific.

In embodiments, assume the robotic program item may be described as follows: *"List<X, Y, Z, RX, RY, RZ, *Speed, Configuration, *Motion Type, *External Axes, *Robot TCPs relative to Robot Base Frame, *OLP WaitTime, etc. >".*

In embodiments, such data organization and description can be used to organize the output dataset both for training and AI usage purposes.

As regards the input training data set, as mentioned above, the input training dataset consists of several sets of poses tuple lists of the given virtual robot.

For example, assume that the robotic path consists of three targets trgt1, trgt2, trgt3, the given robot may reach the three targets via a kinematic motion with a certain robot trajectory which may for example be described through a list of e.g. 300 poses which are provided as poses tuples comprising the six joint values (J1, J2, J3, J4, J5, J6) and optionally their delta times *Δt* or simply times *Ti.* For example, assume the poses tuple item may be described as follows *"List*<*J1, J2, J3, J4, J5, J6, *J7, *External Axes,* **Time*>*.* In embodiments, such data organization and description can be used to organize the input dataset both for training and AI usage purposes.

In embodiments, the input and output training dataset may synthetically be generated by performing the following steps some of which are iterative:
- use a virtual robot in a robotic simulation tool;
- generate different robotic targets with different motion parameters and/or different OLP commands to obtain a list of robotic program items;
- play the simulation for each program item;
- collect the robotic poses tuples calculated by the robotic simulation tool to obtain the corresponding list of poses tuples.

The system populates the input training dataset with the collected poses tuples lists and the output training dataset with the corresponding robotic program items.

In embodiments, the data of the poses tuple lists are organized and described in manners that are suitable to define input datasets both for AI training and AI usage. The robotic poses tuple list comprises at least the poses tuples e.g. the robot's kinematics with the sampled robot poses at least e.g. the list along the entire or a part of the simulation which can optionally contain the times. In embodiments, the data of the robotic program items are organized and described in manners that are suitable to define output datasets both for AI training and AI usage. The robotic program item comprises at least the robotic target coordinates.

In embodiments, the synthetic generation of training datasets may conveniently be repeated for different types of robot models and of different vendors and for different types of input and output datasets etc.

In embodiments, the input and output dataset to train and use the AI or Machine Learning ("ML") module may preferably be provided in a numerical data format. In embodiments, where data are in a non-numerical data format, e.g. in a string format or in other non-numerical formats, a "hash of configuration" is generated to contain a numeric configuration index versus the configuration string so that a numerical data form can be used.

### Algorithms of exemplary embodiments to train the AI model of the module

Exemplary embodiments illustrate the main algorithm phases and steps to provide a robotic program AI module configured for outputting a robotic program are illustrated below.

For this purpose, the data processing system 100 according to embodiments might be further configured to provide a trained robotic program AI module.

The algorithm of the AI model for a given robot may preferably supervised learning. In embodiments, the AI module of a given robot is taught with the input training dataset comprising robotic programs and the output training dataset comprising the corresponding robotic poses tuples.

The training datasets are elaborated to extract a learned function with a Machine Learning ("ML") or Artificial Intelligence ("AI") algorithm, preferably with a ML or AI algorithm selected from the group of supervised learning algorithms. The learned function is such that it can map at its best the input datasets into the output datasets. The goal of the used ML algorithm is to approximate the mapping function so well that for a given poses tuple as input, the corresponding robot program can be predicted as output data for that given input data. Extracted learned function data are used to generate a trained robotic program AI module 401 for the specific robot used. The AI module 401 computes a prediction of the robotic motion of this specific robot so that - when receiving as input a robotic poses tuple 403 - it provides as resulting output 402 the corresponding calculated robotic program 402 PRG-2.

In embodiments, different AI-modules are trained for different types of models of robots. In embodiments, the AI module 401 may be used as a stand-alone module, e.g. a cloud service to predict robot programs. In other embodiments, the AI module 401 may be used as a stand-alone module by a virtual simulation tool 301. In other embodiments, the motion prediction module may be embedded within a virtual simulation tool 301 or in hybrid configurations e.g. standalone and/or embedded. In embodiments, a virtual robotic simulation tool 401 simulates the motion behavior of one or more specific robots of one or more specific robot vendors with a plurality of AI robotic program modules.

### Algorithms of exemplary embodiments to simulate a motion behavior of a robot

In exemplary embodiments, the main algorithm phases and steps to simulate the robot's motion behavior are illustrated with the help of Figure 4.

Figure 4 illustrates a block diagram for simulating a motion behavior of a virtual robot in accordance with disclosed embodiments.

The system is provided with a trained AI module 401 configured to outputting a robotic program 402.

In embodiments, an external application or robotic platform - e.g. a VRC controller - plays a simulation based on its robotic program 305. In other words, assume the user 303 selects the robot program PRG-1 in a format which may e.g. a textual robotic program file format, a virtual 3D robotic path format or virtual robotic program format comprising one or more 3D robotic paths. After or during the robotic simulation is played, the VRC controller 302 sends to the robotic simulation tool 301 the list of robotic poses and times 307. Assume, for example, the robotic simulation tool 301 is Process Simulate. Process Simulate 301 gets from the connected VRC controller 302 either the poses alone or the poses with their times or preferably delta times *Δt*s e.g. reach this position in 0.5 sec, reach that position in 0.2 sec etc. Process Simulate is connected to the VRC controller and, in each certain synchronized time interval, gets poses, times data. For example, each 0.2 virtual second, the VRC controller and Process Simulate synchronize with each other, VRC sends poses, Δtimes & signals and Process Simulate sends back its signals. In embodiments, all robot poses and times are collected until the simulation is ended e.g. assume that the targets of the original robotic program PRG-1 are 20 locations, Process Simulate may for example get circa 2000 poses with their Δtimes. With the received poses 307, Process Simulate may simulate the robot's motion along the poses and time until the end of the simulation. Therefore, in embodiments, based on the robotic poses tuples 307, the robotic simulation tool may still be able to move the virtual robot (not shown) inside the tool itself by moving the robot along the robotic poses at the right times (not shown).

In embodiments, the robotic simulation tool 301 collects the data of the robotic poses and times preferably until the end of the simulation interval. The robotic simulation tool 301 sends to the robotic program AI module 401 the collected robotic poses and the times as input data 403. The AI module 401 returns as output 402 a prediction of a robot program PRG-2, comprising the robotic targets and, optionally, their corresponding motion parameters. Such outputted robotic program can be converted into textual data suitable for upload into the robotic simulation tool 301. For example, assume that the input data 403 is the list of poses and times describing the robotic kinematics, the output 402 of the AI-module 401 is a robotic program PRG-2 as a prediction of the original robotic program PRG-1. For example, the output of the AI-module 401 may in the form of list of targets, their motion parameters and OLP commands e.g. *WaitTime* during welding wait for 0.8 sec.

In embodiments, the predicted robotic program 402, is uploaded into the robotic simulation tool 301.

Advantageously, the user is able to view and inspect the 3D robotic locations around the targets with the motion parameters in a graphical viewer of the simulation tool 301. Examples of viewers of the simulation tool include, but are not limited by, location viewer, path editor, robot program viewer etc.

Advantageously, with the uploaded robotic program PRG-2, the user can now play the simulation inside the robotic simulation tool 301 and, upon need, download a final and validated robotic program 404 to be used to control a real robot at the shopfloor.

In embodiments, the user 303 can play the robotic program PRG-2 404, as a virtual robotic program, as 3D virtual representation of the robotic program, for example to solve collisions, enhance robotic path and/or the motion parameters and make the necessary adjustments. Conveniently, the user 303 can play and simulate the robotic motion within the robotic simulation tool 301 with a reconstructed source code of the predicted robotic program 404. Preferably, the user can simulate the robotic tasks and operations with all the relevant surrounding virtual objects of the robotic cell at the shopfloor.

In embodiments, the user 303 of the robotic simulation tool 301 can inspect in the viewer the 3D visual locations around the targets and can for example investigate how well the tool center point (TCP) of the robot reached such targets with the corresponding motion parameters and configurations.

The received robot program 402, 404 advantageously enable the user to visually inspect and investigate potential issues like collisions with surrounding objects during the simulation of the robotic tasks. Conveniently, the user can inspect the robotic path with the next robotic steps of the virtual robot by inspecting the 3D location in the viewer.

In embodiments, the user 303 can investigate, edit and change the robotic program 404 upon need e.g. to fix collision problems discovered during the simulation within the robotic simulation tool 301. Indeed, in embodiments, the user can visualize inside the viewer of the robotic simulation tool, the robot's tool center point frame (TCPF) and all the relevant surrounding objects and can conveniently edit and make the necessary adjustments.

In case of adjustments to the robotic program 404, the user 303 can generate a new robotic program PRG -3 (not shown) and download it as final robotic program and, optionally, share it back (not shown) with the VRC controller 302. The edited robotic program PRG-3 is an adjusted version of the versions of the original robotic program PRG-1 and of the predicted robotic program PRG-2.

Therefore, optionally, thanks to embodiments, the user can make adjustments by editing the robotic program inside Process Simulate 301 and obtain a new adjusted robotic program PRG-3 which can be simulated, validated, downloaded and sent back to VRC controller to have an accurate VRC controller and Process Simulate simulation, i.e. an accurate simulation both in the VRC controller and both in a CAR tool like Process Simulate.

Advantageously, once the user 303 has the virtual version of the robotic program 404 inside Process Simulate 301, they can see investigate the robotic task scenario, they can access the robotic code, they can inspect the 3D visual location which is the 3D visual frame of a single robotic target location, or simply denoted in the art as 3D location, they can simulate the robot behavior without VRC controller, they can debug and, optionally and upon-need, edit the robotic code to enhance it.

In embodiments, the robotic simulation tool 401 simulates the kinematic motion behavior of one or more specific robots of one or more specific robot vendors with a plurality of robotic program AI modules.

### Algorithms of exemplary embodiments to get a signal based robotic program

In embodiments, from the uploaded robotic program 402, the robotic simulation is advantageously able to predict the *WaitSigna*l OLP command for a certain signal as explained below.

Assume a scenario where the VRC controller 302 provides to the robotic simulation tool 301 not only the data on poses tuple 307 but also additional data on the corresponding signals (not shown).

In fact, assume that the robotic simulation tool is Process Simulate, it is known scenario for the skilled persons that Process Simulate and the VRC controller regular synchronize along the robotic simulation by exchanging data on poses, times and signals. For example, in particular, Process Simulate may receive from the VRC controller data on poses, data on poses + times, or data on poses + times + signals whilst the VRC may receive from the VRC controller no data or data on the signals. An example for signal in the VRC controller is *"Robot A sends signal H*=*TRUE to Robot B through the PLC"* and the example in Process Simulate is *"since robot B get signal H* = *TRUE, it closes a clump and sets signal H*= *FALSE".*

To predict the *WaitSignal* OLP command, in embodiments, the robotic simulation tool 301 uploads from the AI-module 401 the robotic program 402 and collects all the robotic signals received from the VRC controller.

In embodiments, the signal data received from the VRC controller by the robotic simulation tool are used to predict the WaitSignal OLP command by performing the following steps:
- ) in the uploaded robotic program, going over each OLP command *"WaitTime* <>";
   A) checking whether the duration of the wait time is an atypical value;
   B) checking whether in that time interval any robotic signal G got a new value;
- ) if both conditions A) and B) are TRUE, replacing the *"WaitTime* <>" OLP command with *"WaitSignal* <*G*>*".*

In an exemplary embodiment, assume the AI-module output is a robotic program PRG-A with three targets and with wait Time OLP Command as follows:
- *MoveToLocation Target_1, Parameters 1*
- *MoveToLocation Target 2, Parameters 2*
- *WaitTime <0.86>*
- *MoveToLocation Target_3, Parameters_3*

If the system detects that a given signal G has changed in the time interval of Wait Time (e.g. on ~3.9 sec- assume that the four intervals are 0-1.45 sec, 1.45-3.5 sec, 3.5-4.36 sec, 4.36-7.4 sec) and given that the time value of WaitTime is 0.86 which is an atypical value, than the system assumes that the trigger for the robot to continue was the change of signal G and the Wait Time OLP command is replaced with Wait Signal G = true. In other words, the list of robotic signals <Signal> received from the VRC controller are used to find out "if and which signal's change" was the trigger of the end of waiting and the WaitTime commands with atypical values are replaced with the appropriate OLP signal command. Another example of an atypical value is .93 seconds: whereby this time value is considered to be an atypical value because its decimal part is not a round number like .20, .40, .50 in seconds. In embodiments, the skilled persons may easily find other criteria to define an atypical time value for a WaitTime command in industrial robotic simulation.

The new signal based robotic program is now the following PRG-B:
- *MoveToLocation Target_1, Parameters_1*
- *MoveToLocation Target_2, Parameters_2*
- *WaitSignal G* =*True*
- *MoveToLocation Target 3, Parameters 3*

Advantageously, with embodiments the new robotic PRG-B is an accurately determined robot program which is also signal based.

Of course, those skilled in the art will recognize that, for simplicity and clarity, the full structure and operation of all data processing systems suitable for use with the present disclosure is not being illustrated or described herein. Instead, only so much of a data processing system as is unique to the present disclosure or necessary for an understanding of the present disclosure is illustrated and described. The remainder of the construction and operation of data processing system 100 may conform to any of the various current implementations and practices known in the art.

It is important to note that while the disclosure includes a description in the context of a fully functional system, those skilled in the art will appreciate that at least portions of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims.

## Claims

1. A computer implemented method for simulating a motion behavior of a virtual robot, comprising the following steps:
a) receiving (205), from an external robotic platform, data on a robotic poses tuple list comprising at least poses of a virtual robot in a simulation interval, hereafter called robotic pose list;
b) inputting (210) said robotic pose list into a robotic program AI module trained for outputting a robotic program for said robotic pose list; whereby the outputted robotic program comprises at least data on the robotic target path of the interval;
c) by a robotic simulation tool, uploading (215) said robotic program and generating one or more 3D graphic views around one or more corresponding targets of the robotic path;
d) by the robotic simulation tool, simulating (220) the robot's motion behavior from said robotic program on at least one of said 3D graphic views.

2. The method of claim 1, wherein the robotic program AI module is trained via a regression supervised learning algorithm.

3. The method of claim 1 or 2, wherein item a) further includes receiving signal data for the robotic pose list; wherein in item b), the outputted robotic program comprises at least one OLP command "wait for time" and it further includes replacing, within the robotic program, at least one OLP command "wait for time" with one OLP command "wait for a certain signal" when the "wait for time" time-value is atypical and when in the same time slot a certain signal of the signal data has changed its value.

4. The method of any of the previous claims, further comprising controlling a real robot motion according to the simulated motion behavior of item d).

5. The method of any of the previous claims, wherein item d) further includes adjusting the robotic program and/or downloading the adjusted robotic program.

6. The method of any of the previous claims, wherein the robotic program comprises one or more data from the group consisting of:
- motion commands e.g. move to location;
- motion parameters e.g. speed, configuration, motion type;
- OLP commands e.g. wait for time;
- external axes;
- tool center point relative to robot's base frame.

7. The method of any of the previous claims, wherein the robotic poses tuple list comprises one or more data from the group consisting of external axes and times.

8. A data processing system comprising:
a processor; and
an accessible memory, the data processing system particularly configured to:
a) receive, from an external robotic platform, data on a robotic poses tuple list comprising at least poses of a virtual robot in a simulation interval, hereafter called robotic pose list;
b) input said robotic pose list into a robotic program AI module trained for outputting a robotic program for said robotic pose list; whereby the outputted robotic program comprises at least data on the robotic target path of the interval;
c) by a robotic simulation tool, upload said robotic program and generate one or more 3D graphic views around one or more corresponding targets of the robotic path;
d) by the robotic simulation tool, simulate the robot's motion behavior from said robotic program on at least one of said 3D graphic views.

9. A non-transitory computer-readable medium encoded with executable instructions that, when executed, cause one or more data processing system to:
a) receive, from an external robotic platform, data on a robotic poses tuple list comprising at least poses of a virtual robot in a simulation interval, hereafter called robotic pose list;
b) input said robotic pose list into a robotic program AI module trained for outputting a robotic program for said robotic pose list; whereby the outputted robotic program comprises at least data on the robotic target path of the interval;
c) by a robotic simulation tool, upload said robotic program and generate one or more 3D graphic views around one or more corresponding targets of the robotic path;
d) by the robotic simulation tool, simulate the robot's motion behavior from said robotic program on at least one of said 3D graphic views.

10. A computer implemented method for generating a training dataset for training a robotic program AI module configured for outputting a robotic program, the method comprising:
- receiving a virtual representation of a robot;
- receiving several robotic programs each comprising a robotic path for the virtual robot in a time interval;
- for each robotic program, simulating the robot's motion in the time interval to obtain a robotic poses tuple list, wherein, at the end of each simulation time interval, the robotic poses tuple list is collected for populating an input training data set and the associated robotic program is collected for populating an output training dataset;
- storing the input and output training dataset to train an AI model of the robotic program AI module.

11. The method of claim 10,
wherein the robotic program comprises one or more data from the group consisting of:
- motion commands e.g. move to location, jump to location;
- motion parameters e.g. speed, configuration, motion type;
- OLP commands e.g. wait for time;
- external axes;
- tool center point relative to robot's base frame.

12. The method of claim 10 or 11, wherein the robotic poses tuple list comprises external axes and/or times.

13. A computer implemented method for providing a robotic program AI module configured for outputting robotic program of a given robot in a time interval, the method comprising:
- receiving a training dataset with a first interface, wherein said training dataset comprises an input training dataset and an output training dataset, wherein the input training dataset comprises:
- several robotic poses tuple lists of the given robot;
and the output training dataset comprises:
- for each robotic poses tuple list, a corresponding robotic program of the given robot;
- training the robotic location AI module with the input and output training datasets;
- providing said trained AI module with a second interface.
